# EUROPEAN PATENT APPLICATION

(11) **EP 4 717 605 A1**
(43) Date of publication of application: **01.04.2026**
(21) Application number: 24162307.3
(22) Date of filing: 08.03.2024
(51) Int. Cl.: B64D 33/04, B64C 29/00, B64C 9/38, F02K 1/12

(54) **DUCTED ENGINE FOR A VERTICAL TAKE-OFF AND LANDING AIRCRAFT HAVING AN ENGINE INLET SECTION AND AN ENGINE OUTLET SECTION**

(71) Applicant: Lilium GmbH, 82234 Wessling (DE)
(72) Inventor: SMITH, Adam, 82234 Wessling (DE); BUNK, Yannick, 82234 Wessling (DE); BANSAL, Amar, 82234 Wessling (DE); UGARTE, Inigo, 82234 Wessling (DE)
(74) Representative: Ter Meer Steinmeister & Partner

(57) **Abstract**

The invention is related to a ducted engine (10) for a vertical take-off and landing aircraft (100) having an engine inlet section (20) and an engine outlet section (40), and wherein the engine outlet section (40) comprises a moveable nozzle (42) being moveable between at least one cruise position (CP) and at least one hover position (HP), the engine inlet section (20) having an inlet opening area (IA) and the engine outlet section (40) of the nozzle (42) having a cruise opening area (CA) with the nozzle (42) in cruise position (CP) and a hover opening area (HA) with the nozzle (42) in hover position (HP), wherein the hover opening area (HA) is larger than the cruise opening area (CA), and wherein the hover opening area (HA) has a hover relation (HR) to the inlet opening area (IA) between 0.8 and 1.5 and the cruise opening area (CA) has a cruise relation (CR) to the inlet opening area (IA) between 0.5 and 1.2.

## Description

The present invention relates to a ducted engine for a vertical take-off and landing aircraft, a control method for controlling the position of a nozzle of an engine duct of a ducted engine, a computer program product comprising instructions to carry out such a control method as well as an aircraft comprising such a ducted engine.

It is commonly known that vertical take-off and landing aircrafts need ducted engines to provide a propulsion force. For the vertical take-off and landing functionality they usually have a ducted engine which is moveable between different positions, in particular between a cruise position as well as a hover position. Besides so called multi-copters those moveable ducted engines have an increased efficiency in forward movement because they are in generally working like regular aircrafts. For the vertical take-off and landing functionality the ducted engines are moved from the cruise position with a in general horizontal alignment into a hover position with a in general vertical alignment.

One big disadvantage according to the presently known solutions is the fact that for the hover functionality as well as the cruise functionality different parameters can be optimized as to the efficiency of the ducted engines. For cruise, the highest efficiency is achieved by a relatively small outlet at the end of the outlet section, wherein in hover disc loading is a very important parameter to calculate efficiency of the operation of the engine. The disc loading relates in particular to the disc area of the rotors of the engines as well as the outlet area for the propulsion air stream. Due to the fact that in particular being adverse to each other, those two functionalities cannot be brought in alignment, the commonly known aircrafts for vertical take-off and landing having moveable ducted engines need to compromise on the disc loading for both flight situations. This means that the disc loads are optimized as to a combination of cruise and hover situations for the flight. On the other hand, that means that neither for cruise nor for hover the optimum disc loading and efficiency situation can be achieved at all.

It is an object of the present invention to provide a ducted engine with an increased efficiency for cruise as well as for hover flight situations.

Aforesaid object is achieved by a ducted engine according to independent claim 1, a control method according to independent claim 11, a computer program product according to independent claim 14 as well as an aircraft with features of independent claim 15. All features mentioned in the sub claims can be combined freely.

According to the present invention the ducted engine for a vertical take-off and landing aircraft has an engine inlet section and an engine outlet section. The engine outlet section comprises a moveable nozzle being moveable between at least one cruise position and at least one hover position. The engine inlet section has an inlet opening area. The engine outlet section of the nozzle has a cruise opening area with a nozzle in cruise position and a hover opening area with a nozzle hover position. The hover opening area is larger than the cruise opening area and the hover opening area has a hover relation to the inlet opening area between 0.8 and 1.5 and the cruising opening area has a cruise relation to the inlet opening area between 0.5 and 1.2.

The present invention comprises the ducted engine with an additional flexibility as to a changeable parameter of the outlet section. This means that the ducted engine has a moveable nozzle being moveable between at least two different positions or even more. In particular at least one cruise position and at least one hover position can be distinguished from each other. The cruise position of the nozzle is correlated with the ducted engine being in cruise position for a cruise situation of the aircraft. The hover position of the nozzle on the other hand is correlated with a hover position of the ducted engine and a hover situation of the aircraft. The following explanation on take-off and landing situation as well as a cruise situation will explain the details and the advantages of the present invention even better.

An aircraft equipped with one or more inventive ducted engines is able to provide a vertical take-off flight situation. To achieve that vertical take-off the ducted engines need to provide a propulsion of an airstream into a hover direction meaning a direction that moves the aircraft in a more or less vertical direction off the ground. To provide this, usually the ducted engine is also moveable between several positions, in particular can be moved into a hover or so-called take-off position. In that hover position the propulsion axis which usually is coaxial with the rotational axis of rotors being provided inside of the ducted engine, is aligned more or less vertically. In other words, by activating the ducted engine and rotating the rotors an airstream is propelled in a vertical direction downstream thereby providing an uplifting force to the aircraft to lift it from the ground in a vertical direction.

For this vertical take-off situation and the following hover situation, where the vertical take-off and landing aircraft left the ground but is still hovering in a stable situation above the ground, in particular with increasing altitude level, the efficiency needs for running the ducted engines in particular correlate to the so-called disc loading parameter. According to the present invention the disc loading can now be flexibly influenced by adapting the outlet opening area of the nozzle into an increased hover opening area. The increased hover opening area is in particular bigger than the cruise opening area when the nozzle is in its cruise position. The hover opening area in particular has a correlation to the inlet opening area of 0.8 to 1.5. As described later a correlation being equal or greater than 1.0 is even preferred. This means that the disc loading can be reduced meaning that the area through which the propulsed air stream is moved is increased. This increases the efficiency for this hover situation and results in less energy consumption for the vertical take-off situation.

Aforesaid description of the vertical take-off situation is equal for any other inflight hover situation as well as for the landing situations which are all related to the ducted engines as well as the nozzles being in their respective hover position with a vertical alignment of the ducted engine and the nozzle being opened into the hover position having the hover opening area.

Once the aircraft has reached a flying altitude the ducted engines can now be moved into their cruise position. Since this aircraft with moveable ducted engines is configured to have an efficient forward flight, the ducted engines in cruise position will be aligned with more or less a horizontal axis of the rotors and the propulsed air stream. Of course, that cruise position can also be enhanced with further control positions when the ducted engines also work as flaps to control the different angles of the movement of the aircraft during different flight manoeuvres.

As it can be derived from aforesaid paragraph the cruise position of the ducted engine with a more or less horizontal alignment of the rotator axis is different to the hover position with a more or less vertical alignment of the rotor axis. In that horizontal situation in cruise situation of the aircraft also the efficiency is determined in a different way. To have an increased efficiency and propulsion of the aircraft in this flight situation, the airstream needs to be generated in an efficient high-speed functionality. This can be provided with a reduced outlet section at the nozzle. To achieve this with an inventive ducted engine the nozzle is moved from its hover position into its cruise position wherein the hover opening area is reduced down to the cruise opening area being smaller than the hover opening area. Since according to the present invention, the cruise opening area in particular has a cruise correlation with the inlet opening area being between 0.5 and1.2 preferably equal or smaller than 1.0, the air stream is propulsed by the rotating blades and even further increased in velocity by a reduction in square diameter following its path from the engine to the exit and the outlet of the nozzle.

It can be derived from aforesaid description due to the moveable nozzle the outlet area can be changed between in particular at least one cruise outlet area and at least one hover outlet area. Since those different outlet areas can be correlated with the different positions of the ducted engine and different situations of the aircraft the efficiency for running the ducted engine can be flexibly influenced based on the specific flight situation. In other words, by increasing the flexibility opportunities for controlling the nozzle, the overall efficiency for vertical take-off and landing situations as well as for horizontal flight situations can be optimized separately from each other and the overall efficiency is increased significantly. This leads to a reduced energy consumption and thereby reduced necessary amount of battery storage capacity and/or an increased flight range.

It can be of advantage if according to the present invention the ducted engine is characterised in that the upper limit of the cruise relation is 1.0 so that the cruise opening area is always equal to or smaller than the inlet area and/or the lower limit of the hover relation is 1.0 so that it is always equal to or bigger than the inlet area. As already mentioned in the aforesaid paragraphs having a distinction between 1.0 and greater for the hover relation and 1.0 and smaller for the cruise relation results in even better and optimized correlations being very specifically highly efficient for the hover situation and the cruise situation.

A further advantage can be achieved if according to the present invention the ducted engine is characterised in that the nozzle comprises passive actuation means for a passive movement between the at least one hover position and the at least one cruise position, in particular being passively actuated by a movement of the ducted engine between different engine positions. Those actuation means for passive movements can for example comprise gears and/or wires without any further active actuator being involved in that movement. For example, if the actual flight situation can be easily determined by the actual engine position the engine position can be connected by wiring or gear boxes to nozzle moving elements. Thereby, the movement of the ducted engine from one engine position to another is automatically followed by a movement of the nozzle from one nozzle position to another. The correlation between the engine positions and the nozzle positions is built in the wiring and/or the gearing of the passive actuation means for that passive movement.

A further advantage ca be achieved if according to the present invention the ducted engine is characterised in that the hover relation is between 1.1 and 1.3 and/or the cruise relation is between 0.8 and 1.0. Aforesaid parameter combinations are even more preferred as to increased efficiency for the hover situation as well as for increased efficiency during the cruise situation of the aircraft. Preferably those limitations are also built in the maximum movement limitations of the nozzle and thereby additional movement is not necessary and the complexity and overall rate of the ducted engine can be reduced.

It is further an advantage if according to the present invention the ducted engine is characterised in that at least one further geometrical parameter of the engine inlet section, the engine outlet section, the total axial length of the engine duct, the middle section of the engine duct and/or the fan is optimized for a reduced disc loading of the aircraft. This means that additionally to the already mentioned cruise relation and hover relation further geometrical construction parameters of the ducted engine can be optimized as to reduced disc loading. Additional examples concerning those further geometrical parameters are discussed in more detail below. In particular that additional geometrical parameter can be selected for example from rotor diameter, axial length, opening angle and hover position or the like.

It can be an advantage if according to the present invention the ducted engine is characterised in that the at least one further geometrical parameter includes a rotor diameter of the fan being between 0.2 and 0.9 meters, preferably 0.3 and 0.4 meters. That preferred diameter in particular is related to relatively small aircrafts for transporting about 4 to 10 passengers. In particular this is a difference to regular transportation aircrafts which are commonly known for transporting 100+ passengers and thereby need to have one huge engine at each side of the aircraft. Since inventive aircrafts, as discussed later on, in particular comprise not only two ducted engines but multiple ducted engines they can and should be constructed relatively small compared to those in commonly known transportation aircrafts.

It is further an advantage if according to the present invention the ducted engine is characterised in that the at least one further geometrical parameter includes an axial length of the engine duct between the engine inlet section and the engine outlet section between 0.2 and 1.5 meters, preferably between 0.8 and 1.2 meters. According to this specific embodiment the axial length is optimized thereby to make sure that in a hover position the ducted engine and in particular the axial length does not conflict with any surroundings of the aircraft. In hover position before take-off and after landing the vertical or more or less vertical alignment of the ducted engine might lead to a conflict of geometrical order between the lower end of the nozzle and the ground beneath the aircraft. If the axial length is to long there wouldn't be the possibility to move the ducted engine completely in hover position because otherwise a nozzle would crash into the ground. By having the preferred parameter between 0.5 and 1.5 meters for the axial length this usually is aligned with the size of the aircraft meaning that even the maximum length of the axial of the engine duct the complete ducted engine can still be moved in a more or less vertical hover position without conflicting with the ground.

It is further an advantage if according to the present invention the ducted engine is characterised in that the at least one further geometrical parameter includes an opening angle for the nozzle in hover position between 8 and 16° related to a length of the nozzle between 100 and 300 mm, preferably between 10 and 14° related to a length of the nozzle between 150 and 250 mm. In the relation of the angles is measured in correlation to the rotational axis of the blades of the engine inside of the airduct, meaning the overall central axis of the ducted engine.

It is further an advantage if according to the present invention the ducted engine is characterised in that the at least one further geometrical parameter includes an opening angle for the nozzle in cruise position between -2 and 6° related to a length of the nozzle between 100 and 300 mm, preferably between 0 and 4° related to a length of the nozzle between 150 and 250 mm. Also, this situation is preferred and the angles are measured in relation to the rotational axis of the ducted engine.

It is further of advantage if according to the present invention the ducted engine is characterised in that an actuator provides an actuation force to move the nozzle between the cruise position and the hover position. That means that the actuator can be a passive actuator or an active actuator. Wires can be used for passive actuation as further described further above. But also, active actuation by the use of motor elements, electric motors or the like is possible for movement of the nozzle.

A further aspect of the present invention is to provide a control method for controlling the position of the nozzle of an engine duct of a ducted engine according to the present invention, comprising the following steps:
- capture control input for a desired flight condition of the aircraft,
- move the nozzle of the engine duct to a position between the hover position and the cruise position correlating with the captured control input to provide a hover relation between 0.8 and 1.5 and/or a cruise correlation between 0.5 and 1.2.

In particular the movement takes place into the hover position and/or the cruise position. An inventive control method comes along with the same advantages as discussed in detail with respect to the inventive ducted engine.

It can be an advantage if according to the present invention the control method is characterised in that at least one movement parameter of the movement of the nozzle is based on at least one flight parameter of the present and/or the desired flight condition of the aircraft, the at least one movement parameter in particular being selected from the following list:
- movement speed,
- movement acceleration,
- movement steps.

Aforesaid list is a non-exhaustive list. Of course, also a correlation between movements and different types of flight conditions are possible. The flight parameter can also be selected from the pressure, the speed of the ground, the wind speed, the airduct speed, the turbine rotation or the like. In particular it can be distinguished between a movement, which is a stepwise movement and one which is a continuous movement.

A further advantage can be achieved if according to the present invention the control method is characterised in that the at least one flight parameter is selected from the following list:
- aircraft speed,
- airspeed in the airduct,
- wind speed,
- pressure in the airduct.

Aforesaid list is non exhaustive. Additionally, the measurements of aforementioned additional parameters allow a further explicit definition of the actual flight situation. Based on that additional flight parameters further positions can be defined and/or further correlations for cruise correlation, hover correlation or even a control correlation for the nozzle for a specific control movement of the nozzle of a control position of the nozzle can be achieved.

A further aspect of the further invention is to provide a computer program product, comprising instructions, which when executed by a computer, cause the computer to be perform the steps of an inventive control method. Thereby, the inventive computer program product comes along with the same advantages as discussed in detail with respect to the inventive control method.

It is a further aspect of the present invention to provide an aircraft for vertical take-off and landing comprising at least one inventive ducted engine. Thereby, an inventive aircraft comes along with the same advantages as discussed in detail with respect to an inventive ducted engine.

The present invention is discussed in more details with respect to the accompanying drawings. Those show in a schematical way:
- Fig. 1: one example of a ducted engine with a nozzle in cruise position,
- Fig. 2: the embodiment of figure 1 with a nozzle in hover position,
- Fig. 3: a further embodiment of the ducted engine with a nozzle in cruise position,
- Fig. 4: one possibility of the control method,
- Fig. 5: a further possibility of the control method and
- Fig. 6: one example of an inventive aircraft.

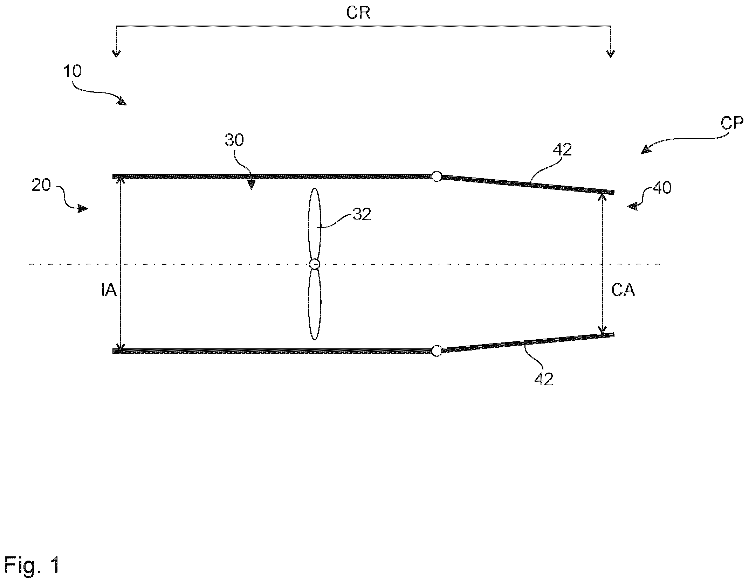

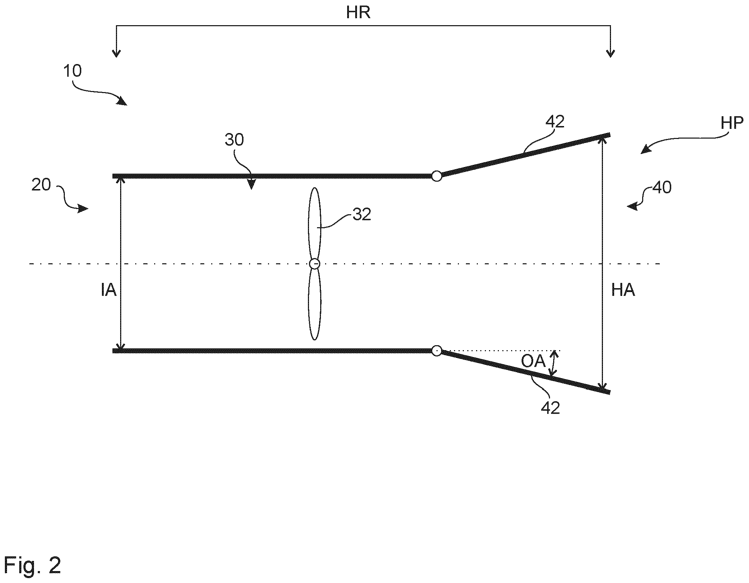

Figures 1 and 2 shows a ducted engine 10 according to the present invention. The ducted engine comprises a rotor being a fan inside of the engine duct 30 and the engine duct extending fully between the engine inlet section 20 and the engine outlet section 40. The engine outlet section 40 is constructed in a flexible way by having the nozzle 42. The rotational axis as depicted in figure 1 is in particular used to align with different flight situations of the aircraft 100. In figure 1, the cruise position CP of the nozzle 42 is depicted. This means that the axis is more or less aligned in a horizontal alignment to provide a propulsion force with the fan 32 in the engine duct 30 moving the aircraft 100 in a forward direction and increase the velocity of the aircraft. To do this, an increased efficiency in energy consumption of the fan 32 the nozzle 42 is closed into a cruise position CP having a cruise opening are CA being smaller than the inlet opening area IA in figure 1. Thereby, the propulsed air speed coming along from the fan 32 is increased in velocity even more before exiting the engine duct 30 through outlet section 40 and the high efficiency propulsion force can be applied to the aircraft 100. Having a smaller cruise opening area CA than the inlet opening area IA leads to an overall cruise relation CR below 1.0.

Figure 2 shows the same ducted engine 10 as figure 1 but in a different flight situation. For providing a hover functionality to the aircraft 100 now in a first step the ducted engine 10 is moved (not depicted) in a more or less vertical alignment with its rotational axis. By moving it and turning it by 90° into a vertical alignment now the propulsed air stream is forced downwards and thereby is providing a direct uplifting force to the aircraft 100. In that hover situation now a different efficiency situation needs to be taken into account. In particular disc loading needs to be compromised by increasing the outlet area here by having a hover opening area HA which is bigger than the cruise opening area CA as well as the inlet opening area IA. This leads to an overall hover relation HR between the hover opening area HA and the inlet opening area IA being greater than 1.0. This leads to optimised disc loading and an increased efficiency in energy consumption of that hover situation. To control the hover position HP of the nozzle 42 in particular actuation means can be used to directly control an opening angle OA being for example around 4 or 5°. The opening angle OA is measured in correlation to the central axis meaning the rotational axis of the fan 32.

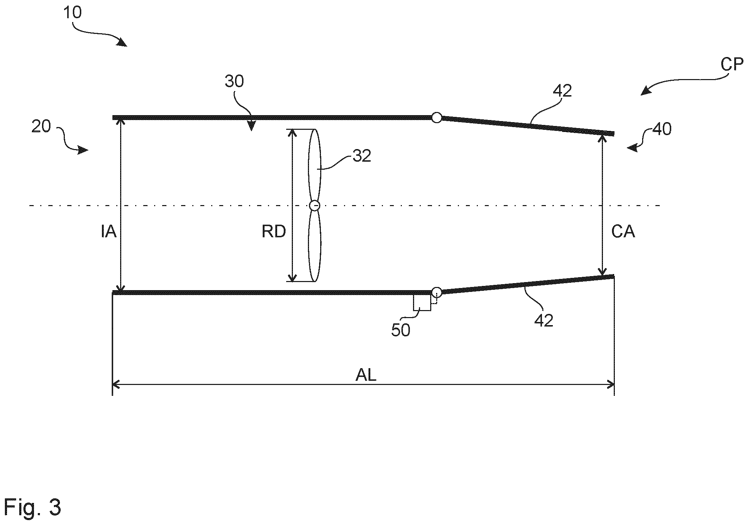

Figure 3 shows a further embodiment of an inventive ducted engine. In this case the overall axial length AL is defined for the engine duct 30. Also, as an additional geometrical parameter the rotor diameter RD can be defined. For moving the nozzle 42 here an active actuator in the form of an actuator 50 for directly moving the nozzle 42 between the cruise position CP and the hover position HP is depicted.

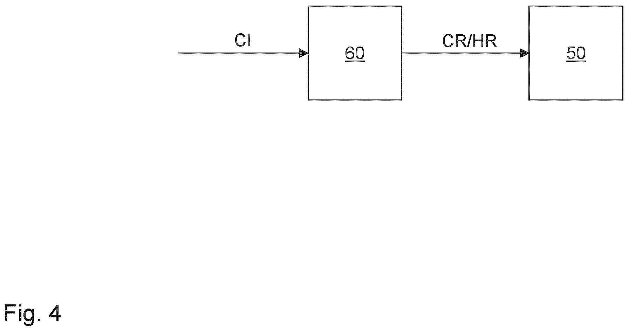

Figure 4 shows one embodiment of an inventive control method. Using a control input CI in the control module 60 a position information is generated by having either a defined cruise relation CR or a hover relation HR which is then send on to an actuator 50. Based on the output in form of the defined relation the actuator 50 is moving the nozzle to a defined cruised position or a hover position providing the requested cruise relation CR or a hover relation HR.

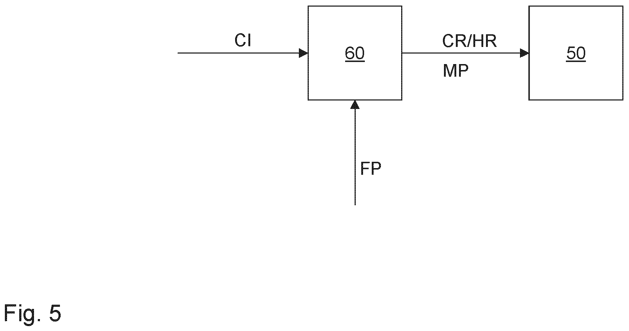

The method is further embodied according to figure 5 by taking in account an additional flight parameter FP. The flight parameter FP being an external parameter of the aircraft 100 can now be used to define and generate a further out put in a form of a move parameter to define how quick the movement what kind of steps be part of the movement or what is the end point of the movement for moving the nozzle in the defined desired position.

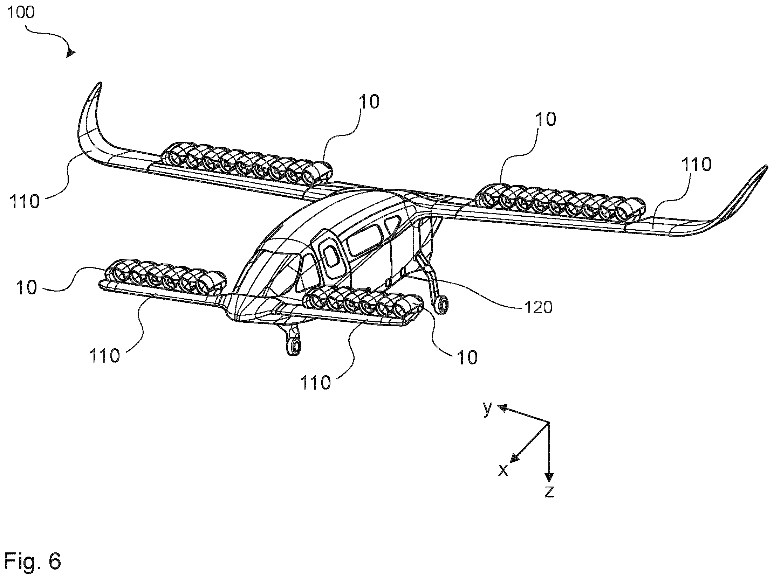

Figure 6 shows one embodiment of an aircraft 100 having a landing gear 120 and wings 110. Both double wings are equipped with several ducted engines 10 which are all equipped and configured according to the present invention.

The aforesaid descriptions of the embodiments describe the present invention only by the way of example.

### Reference signs

- 10: ducted engine
- 20: engine inlet section
- 30: engine duct
- 32: fan
- 40: engine outlet section
- 42: moveable nozzle
- 50: actuator
- 60: control module

- 100: aircraft
- 110: wings
- 120: landing gear

- CP: cruise position
- HP: cruise position
- IA: inlet opening area
- CA: cruise opening area
- HA: hover opening area
- CR: cruise relation
- HR: hover relation
- RD: rotor diameter
- AL: axial length
- OA: opening angle
- CI: control input
- MP: move parameter
- FP: flight parameter

## Claims

1. Ducted engine (10) for a vertical take-off and landing aircraft (100) having an engine inlet section (20) and an engine outlet section (40), and wherein the engine outlet section (40) comprises a moveable nozzle (42) being moveable between at least one cruise position (CP) and at least one hover position (HP), the engine inlet section (20) having an inlet opening area (IA) and the engine outlet section (40) of the nozzle (42) having a cruise opening area (CA) with the nozzle (42) in cruise position (CP) and a hover opening area (HA) with the nozzle (42) in hover position (HP), wherein the hover opening area (HA) is larger than the cruise opening area (CA), and wherein the hover opening area (HA) has a hover relation (HR) to the inlet opening area (IA) between 0.8 and 1.5 and the cruise opening area (CA) has a cruise relation (CR) to the inlet opening area (IA) between 0.5 and 1.2.

2. Ducted engine (10) according to claim 1, **characterised in that** the upper limit of the cruise relation (CR) is 1.0 so that the cruise opening area (CA) is always equal to or smaller than the inlet area (IA) and/or the lower limit of the hover relation (HR) is 1.0 so that the hover opening area (HA) is always equal to or bigger than the inlet area (IA).

3. Ducted engine (10) according to any of the proceedings claims, **characterised in that** the nozzle (42) comprises passive actuation means for a passive movement between the at least one hover position (HP) and the at least one cruise position (CP), in particular being passively actuated by a movement of the ducted engine (10) between different engine positions.

4. Ducted engine (10) according to any of the proceedings claims, **characterised in that** the hover relation (HR) is between 1.1 and 1.3 and/or the cruise relation (CR) is between 0.8 and 1.0.

5. Ducted engine (10) according to any of the preceding claims, **characterised in that** at least one further geometrical parameter of the engine inlet section (20), the engine outlet section (40), the total axial length (AL) of the engine duct (30), the middle section of the engine duct (30) and/or the fan (32) is optimized for a reduced disc loading of the aircraft (100).

6. Ducted engine (10) according to claim 5, **characterised in that** the at least one further geometrical parameter includes a rotor diameter (RD) of the fan (32) being between 0.2 and 0.9m, preferably between 0.3 and 0.4m.

7. Ducted engine (10) according to claims 5 or 6, **characterised in that** the at least one further geometrical parameter includes an axial length (AL) of the engine duct (30) between the engine inlet section (20) and the engine outlet section (40) between 0.5 and 1.5m, preferably between 0.8 and 1.2m.

8. Ducted engine (10) according to any of the claims 5 to 7, **characterised in that** the at least one further geometrical parameter includes an opening angle (OA) for the nozzle (42) in hover position (HA) between 8° and 16° related to a length of the nozzle (42) between 100 and 300 mm, preferably between 10° and 14° related to a length of the nozzle (42) between 150 and 250 mm.

9. Ducted engine (10) according to any of the claims 5 to 8, **characterised in that** the at least one further geometrical parameter includes an opening angle (OA) for the nozzle (42) in cruise position (CA) between -2° and 6° related to a length of the nozzle (42) between 100 and 300 mm, preferably between 0° and 4° related to a length of the nozzle (42) between 150 and 250 mm.

10. Ducted engine (10) according to any of the preceding claims, **characterised in that** an actuator (50) provides an actuation force to move the nozzle (42) between the cruise position (CP) and the hover position (HP).

11. Control method for controlling the position of a nozzle (42) of an engine duct (30) of a ducted engine (10) with the features of any of claims 1 to 10, comprising the following steps:
- Capture a control input (CI) for a desired flight condition of the aircraft (100),
- Move the nozzle (42) of the engine duct (30) to a position between the hover position (HP) and the cruise position (CP) corelating with the captured control input (CI) to provide a hover relation (HR) between 0.8 and 1.5 and/or a cruise relation (CR) between 0.5 and 1.2.

12. Control method according to claims 11, **characterised in that** at least one move parameter (MP) for the movement of the nozzle (42) is based on at least one flight parameter (FP) of the present and/or the desired flight condition of the aircraft (100), the at least one move parameter (MP) in particular being selected from the following list:
- Movement speed
- Movement acceleration
- Movement steps

13. Control method according to any of claims 11 or 12, **characterised in that** the at least one flight parameter (FP) is selected from the following list:
- Aircraft speed
- Air speed in the air duct (30)
- Wind speed
- Pressure in the air duct (30)

14. Computer program product, comprising instructions, which, when executed by a computer, cause the computer to perform the steps of a control method according to claims 11 to 13.

15. Aircraft (100) for vertical take-off and landing comprising at least on ducted engine (10) with the features of claims 1 to 10.
